# EUROPÄISCHE PATENTSCHRIFT

(11) **EP 1 367 246 B1**
(45) Veröffentlichungstag und Bekanntmachung des Hinweises auf die Patenterteilung: **08.03.2006**
(21) Anmeldenummer: 03101324.6
(22) Anmeldetag: 13.05.2003
(51) Int. Cl.: F02D 41/04, F02N 17/00

(54) **Verfahren zur Abstellung einer Brennkraftmaschine und Vorbereitung ihres Anlassens**
Method to stop a combustion machine and ease its start
Méthod pour arrêter un moteur à combustion interne et faciliter son démarrage

(30) Priorität: 14.05.2002 EP 21004924
(43) Veröffentlichungstag der Anmeldung: 03.12.2003
(73) Patentinhaber: Ford Global Technologies, LLC, A subsidary of Ford Motor Company, Dearborn, MI 48126 (US)
(72) Erfinder: Badke, Klaus, 50670, Köln (DE); Kramer, Ulrich, 51427, Bergisch Gladbach (DE); Grieser, Klemens, 40764, Langenfeld (DE); Stoffels, Harald, 50735, Köln (DE)
(74) Vertreter: Drömer, Hans-Carsten

(56) Entgegenhaltungen:
- DE-A- 10 123 037
- DE-A- 19 848 368
- DE-C- 19 735 455

## Beschreibung

Die Erfindung betrifft ein Verfahren zur Vorbereitung des Anlassens einer Brennkraftmaschine, vorzugsweise einer Brennkraftmaschine mit Direkteinspritzung. Ferner betrifft die Erfindung eine zur Durchführung eines derartigen Verfahrens ausgebildete Brennkraftmaschine.

Zur Verbesserung der Kraftstoffausnutzung in Fahrzeugen mit Verbrennungsmotor wird häufig die Brennkraftmaschine anstelle eines Leerlaufbetriebes vollständig abgestellt, wenn keine Antriebsleistung benötigt wird. Die Brennkraftmaschine muß dann neu angelassen werden, wenn ihre Leistung wieder benötigt wird. Für das Anlassen weisen herkömmliche Brennkraftmaschinen spezielle Einrichtungen wie etwa einen Anlassermotor oder einen als Motor einsetzbaren Generator (sogenannter Startergenerator) auf. Hierbei handelt es sich um verhältnismäßig große und kostenaufwendige Einrichtungen, da für das Anlassen des Verbrennungsmotors eine hohe elektrische Leistung erforderlich ist.

Darüber hinaus ist es bekannt, eine Brennkraftmaschine durch Auslösen einer Verbrennung anzulassen. Dies ist insbesondere bei Brennkraftmaschinen mit Funkenzündung und Direkteinspritzung möglich. Der direkt in die Brennkammer eingespritzte Kraftstoff wird dabei durch einen Funken gezündet, und die anschließende Explosion des Luft-Kraftstoff-Gemisches bewegt den Kolben und startet die Brennkraftmaschine, ohne daß die Kurbelwelle durch eine zusätzliche Anlassereinrichtung bewegt werden müßte. Ein derartiges direktes Anlassen der Brennkraftmaschine erfordert jedoch bestimmte Randbedingungen, um erfolgreich durchgeführt werden zu können. Insbesondere ist es erforderlich beziehungsweise vorteilhaft, daß die Kurbelwelle zu Beginn des Anlassens in oder nahe einer bestimmten Position steht. Dies ist bei herkömmlichen Brennkraftmaschinen in der Regel nicht gewährleistet, da die Kurbelwelle nach dem Abstellen und Auslaufen der Brennkraftmaschine in zufälligen Positionen stehen bleibt.

Um eine Brennkraftmaschine für ein durch einen Verbrennungsvorgang initiiertes bzw. unterstütztes Anlassen vorzubereiten, sind aus dem Stand der Technik verschiedene Maßnahmen bekannt. So wird in der DE 100 24 438 A1 und der DE 198 08 472 A1 vorgeschlagen, vor dem Anlassen die Kurbelwelle von einem Elektromotor in eine bestimmte Position bringen zu lassen, aus der heraus das nachfolgende Anlassen des Verbrennungsmotors durch Verbrennungen bei verringerter Kompression und verringertem Füllgrad unterstützt werden kann. Um den Verbrennungsmotor in eine für das direkte Starten geeignete Position zu bringen, ist es ferner aus der DE 198 35 045 A1 neben der aktiven Drehung mittels eines Elektromotors bekannt, beim Abstellen die Kurbelwelle durch ein geeignetes Bremssystem in einer gewünschten Position anzuhalten. Als zusätzliche Maßnahme zur Vorbereitung einer geeigneten Position der Kurbelwelle wird weiterhin in der WO 01/48373 A1 vorgeschlagen, spezielle Zünd- und Einspritzimpulse vorzusehen. Über diese Impulse soll dabei sowohl ein definiertes Weiterdrehen des Verbrennungsmotors als auch dessen Abstoppen in einer bestimmten Position erreicht werden.

Aus der DE 198 48 368 ist ferner ein Verfahren zur Steuerung einer Brennkraftmaschine bekannt, bei dem während des Abstellens der Brennkraftmaschine die Drosselklappe geschlossen wird und nach Sinken der Drehzahl unter einen Schwellenwert, bei dem die Brennkraftmaschine nicht mehr von selber läuft, die Drosselklappe voll geöffnet wird.

Vor diesem Hintergrund war es Aufgabe der vorliegenden Erfindung, ein Verfahren zur Vorbereitung des Anlassens einer Brennkraftmaschine bereitzustellen, welches insbesondere die Rahmenbedingungen für ein starterloses Anlassen verbessert, sowie ein geräuscharmes Abstellen der Brennkraftmaschine gewährleistet.

Diese Aufgabe wird durch ein Verfahren mit den Merkmalen des Anspruchs 1 sowie eine Brennkraftmaschine mit den Merkmalen des Anspruchs 3 gelöst.

Eine Vorteilhafte Ausgestaltung ist in dem Unteranspruch enthalten.

Das Verfahren zur Vorbereitung des Anlassens einer Brennkraftmaschine ist dadurch gekennzeichnet, daß während des Auslaufens oder nach dem Auslaufen der Brennkraftmaschine über den herkömmlichen Umfang hinaus Abgas aus den Zylindern entfernt und/oder Frischluft in die Zylinder hinein gesaugt wird. Bei der Brennkraftmaschine handelt es sich vorzugsweise um eine Brennkraftmaschine mit Direkteinspritzung des Kraftstoffes in die Brennkammern.

Zum erfindungsgemäßen Verfahren gehört es, daß die Drosselklappe möglichst frühzeitig während des Auslaufens der Brennkraftmaschine geöffnet wird. Andererseits ist es aus Geräuschgründen und auf Grund von Vibrationen der Brennkraftmaschine während des Auslaufens sinnvoll, die Drosselklappe geschlossen zu halten. Daher wird erfindungsgemäß die Drosselklappe erst geöffnet, wenn eine bestimmte Grenzdrehzahl während des Auslaufens der Brennkraftmaschine unterschritten wird. Diese Grenzdrehzahl wird vorteilhafterweise durch die Eigenfrequenz des Antriebsstranges, bestehend aus der Brennkraftmaschine, ggf. ei n-schließlich Kupplung, Getriebe und Antriebswellen, sowie den Nebenaggregaten, in der Motorlagerung bzw. -aufhängung bestimmt.

Bei einer vorteilhaften Ausgestaltung entspricht die Grenzdrehzahl für einen Ottomotor mit vier Zylindern der Hälfte der Eigenfrequenz. Bei dieser Drehzahl wird üblicherweise die Brennkraftmaschine erheblich zu Schwingungen angeregt. Während des Motorauslaufens ist es daher sinnvoll, diesen Bereich geringer Anregung passiert zu haben. Für einen Sechszylindermotor entspricht die Grenzdrehzahl 1/3 der Eigenfrequenz und für einen Fünfzylinder 2/5, so daß sich als Gesetzmäßigkeit für die Grenzdrehzahl 2/Anzahl der Zylinder ergibt.

Die Erfindung betrifft ferner eine Brennkraftmaschine, welche zur Durchführung des Verfahrens der vorstehend erläuterten Art eingerichtet ist. Insbesondere kann eine derartige Brennkraftmaschine eine Motorsteuerung aufweisen, die derart programmiert ist, daß diese bei einem Auslaufen der Brennkraftmaschine oder danach die Drosselklappe in einer Weise ansteuert, welche die Durchführung des erfindungsgemäßen Verfahrens erlaubt.

Die Erfindung wird nachfolgend anhand der beiden Figuren beispielhaft näher erläutert.

Es zeigen dabei:
- Figur 1:: schematisch die Komponenten einer Brennkraftmaschine, bei welcher das erfindungsgemäße Verfahren angewendet werden kann.
- Figur 2:: ein Diagramm der Drosselklappenstellung während des Auslaufens einer Brennkraftmaschine aufgetragen über die Zeit.

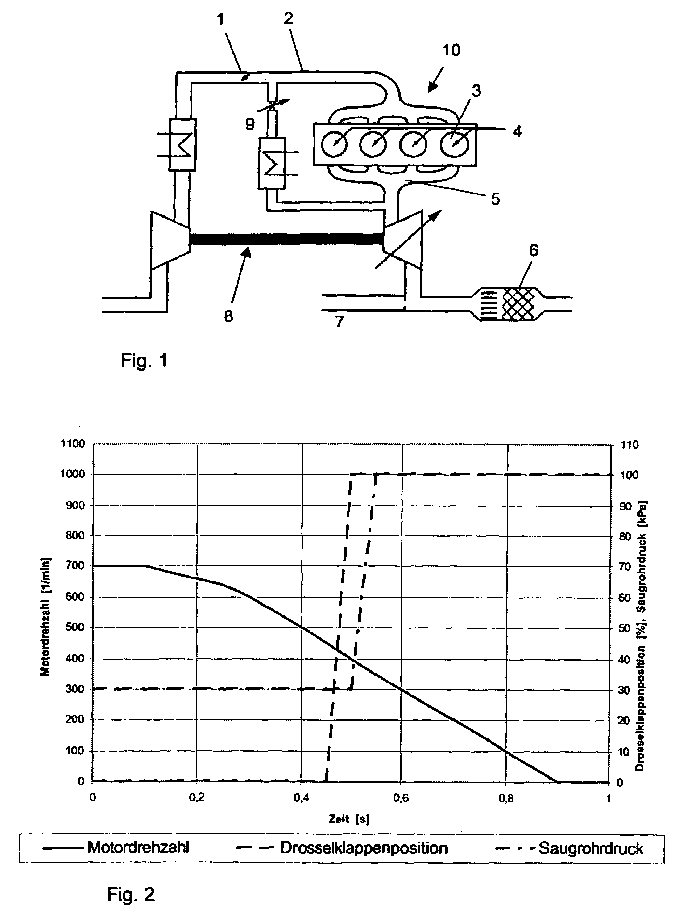

Bei der in Figur 1 dargestellten Brennkraftmaschine 10 handelt es sich um einen Verbrennungsmotor mit direkter Einspritzung von Benzin über die in die Zylinder 3 führende Kraftstoffzufuhr 4. Ein solcher Motor mit Direkteinspritzung hat den Vorteil, daß er durch Zündung des Luft-Kraftstoff-Gemisches in den Zylindern 3 direkt gestartet werden kann, ohne daß ein zusätzlicher Startermotor die Kurbelwelle während einer Anlaßphase antreiben muß.

Die Brennkraftmaschine 10 weist ferner einen Ansaugkrümmer 2 zur Zufuhr von Frischluft auf, deren Zufuhrrate über die Drosselklappe 1 eingestellt werden kann. Die Abgase der Brennkraftmaschine 10 werden über den Abgaskrümmer 5 und einen in der Abgasleitung angeordneten Katalysator 6 abgeführt. Weiterhin ist in der Figur eine externe Abgasrückführung 9 mit einem AGR-Ventil (bzw. EGR-Ventil) erkennbar, über welche eine kontrollierte Rückführung von Abgasen von der Verbrennungsseite auf die Ansaugseite vorgenommen werden kann. Zur Erhöhung des Ladedruckes ist ferner ein Abgasturbolader 8 zwischen Abgasleitung und Frischluftzufuhr vorgesehen.

Erfindungsgemäß wird nun die Drosselklappe 1 bei Beginn des Auslaufens einer Brennkraftmaschine 10 zunächst geschlossen, bis eine Grenzdrehzahl unterschritten wird. Diese Grenzdrehzahl wird durch die Größenordnung der Eigenfrequenz der Brennkraftmaschine 10 bestimmt. Üblicherweise liegt die Eigenfrequenz bei einer Brennkraftmaschine mit vier in Reihe angeordneten Zylinder im Bereich von 9 bis 14 Hz. Eine vorteilhafte Grenzdrehzahl ergibt sich z. B. bei der Hälfte der Eigenfrequenz. So beträgt z. B. bei einer Eigenfrequenz von 12 Hz die Grenzdrehzahl 360 /min.

Figur 2 zeigt beispielhaft ein Diagramm eines Auslaufens einer Brennkraftmaschine. Zu erkennen sind die Drehzahl der Brennkraftmaschine aufgetragen über die Zeit. Weiter gezeigt werden die Drosselklappenstellung (in % Öffnung) als auch der korrespondierende Ansaugrohrdruck. Nach Unterschreiten einer Grenzdrehzahl der Brennkraftmaschine wird die Drosselklappe voll geöffnet, um so die erforderliche Durchspülung der Zylinder bzw. die Füllung der Zylinder mit Frischluft zu erreichen.

## Patentansprüche

1. Verfahren zur Vorbereitung des Anlassens einer Brennkraftmaschine (10), vorzugsweise einer Brennkraftmaschine mit Direkteinspritzung, wobei bei Beginn des Auslaufens der Brennkraftmaschine die Drosselklappe (1) geschlossen ist und bei Unterschreiten einer Grenzdrehzahl geöffnet wird
**dadurch gekennzeichnet, daß**
diese Grenzdrehzahl durch die Eigenfrequenz des Antriebsstranges bestimmt wird.

2. Verfahren nach Anspruch 1,
**dadurch gekennzeichnet, daß**
die Grenzdrehzahl dem doppelten der Eigenfrequenz dividiert durch die Anzahl der Zylinder der Brennkraftmaschine (10) entspricht.

## Claims

1. Method for preparing to start an internal combustion engine (10), preferably an internal combustion engine with direct injection, the throttle valve (1) being closed at the commencement of the run-down of the internal combustion engine and being opened when a limit rotational speed is undershot, **characterized in that** this limit rotational speed is determined by the characteristic frequency of the drive train.

2. Method according to Claim 1, **characterized in that** the limit rotational speed corresponds to double the characteristic frequency, divided by the number of cylinders of the internal combustion engine (10).

## Revendications

1. Procédé pour préparer le démarrage d'un moteur à combustion interne (10), de préférence d'un moteur à combustion interne à injection directe, dans lequel, au début du ralentissement du moteur à combustion interne, le papillon (1) est fermé et est ouvert à partir d'un régime inférieur à un régime limite,
**caractérisé en ce que**
ce régime limite est déterminé par la fréquence propre de la transmission.

2. Procédé selon la revendication 1,
**caractérisé en ce que**
le régime limite correspond à deux fois la fréquence propre divisée par le nombre des cylindres du moteur à combustion interne (10).
